# EUROPEAN PATENT SPECIFICATION

(11) **EP 1 246 871 B1**
(45) Date of publication and mention of the grant of the patent: **23.01.2008**
(21) Application number: 01984420.8
(22) Date of filing: 13.07.2001
(51) Int. Cl.: C08L 83/08

(54) **CONDENSATION CURABLE FLUOROSILICONE SEALANT COMPOSITION AND METHOD FOR MAKING**
RTV-FLUOROSILICON-DICHTUNGSMASSE UND HERSTELLUNGSVERFAHREN
COMPOSITION DE SCELLEMENT A BASE DE FLUOROSILICONE POLYMERISABLE PAR CONDENSATION, ET METHODE DE PRODUCTION

(30) Priority: 27.07.2000 US 626767
(43) Date of publication of application: 09.10.2002
(73) Proprietor: GENERAL ELECTRIC COMPANY, Schenectady, NY 12345 (US)
(72) Inventor: SINGH, Navjot, Hastings-on-Hudson, New York 10706 (US); LEMAN, John, Thomas, Niskayuna, NY 12309 (US); WHITNEY, John, Morgan, Niskayuna, NY 12309 (US)
(74) Representative: Herrmann, Uwe
(86) International application number: PCT/US2001/022178
(87) International publication number: WO 2002/010240

(56) References cited:
- EP-A- 0 337 790
- EP-A- 0 602 875
- US-A- 3 109 826
- US-A- 5 236 997

## Description

The present invention is based on work sponsored under NASA's High Speed Research Contract NASI 20220, with Boeing under subcontract ZA0073 Task 22, Subtask 4.2.2.4.

### BACKGROUND OF THE INVENTION

The present invention is directed to a method for blending various silicone rubber ingredients comprising fluorosilicone containing species to produce a neutral condensation curable silicone sealant composition useful as a fuel tank sealant in aircraft.

Among the principal requirements of a fuel tank sealant, there are included solvent resistance and resistance to weight loss at elevated temperatures. While it is generally known that silicone elastomers exhibit superior weight loss resistance at elevated temperatures when compared to organic rubbers, silicone elastomers often do not have acceptable solvent and weight loss resistance at elevated temperatures which are sufficient to satisfy the stringent requirements of an aircraft fuel tank sealant.

A variety of room temperature curable organopolysiloxane compositions are shown by Smith, U.S. patent 3,109,826. Smith discloses that bis(alkoxysilyl) C₍₁₋₁₀₎ hydrocarbons can be used as crosslinkers in combination with a metal salt to effect the neutral condensation cure of silanol terminated polydiorganosiloxane fluids, such as hydroxy terminated polydimethylsiloxane (PDMS) fluids. As described by Smith, elastomers obtained from such silicone compositions have been found to have improved elongation and compressive strength properties.

Fujiki, U.S. patent 5,236,997, directed to a curable fluorosilicone rubber composition, describes a cured silicone rubber having excellent resistance to the effects of extensive exposure to organic solvents. However, Fujiki also explains that the use of conventional silicone fluids having bulky fluorine-containing substituent groups adjacent to terminal silanol can interfere with cure. As a result, Fujiki resorts to the synthesis of a special fluorosilicone base polymer substantially free of bulky fluorine containing organic groups in the terminal positions. The resulting chain-end modification to make curable polymers requires an additional step in the process.

While fluorosilicone elastomers have generally been found to have enhanced solvent resistance, fluorosilicone elastomers often do not exhibit a sufficient level of thermal stability to satisfy aircraft fuel tank sealant requirements. In an effort to enhance the thermal stability of fluorosilicones, non-siloxane groups, such as silylarylenes, have been inserted into the polyfluorosiloxane backbone, as shown by Grassie and Beattie " The Thermal Degradation of Polysiloxanes: Part 7", Polymer Degradation and Stability, 8:177-193 (1984).

Procedures for making condensation curable silicone compositions convertible to solvent resistant silicone elastomers exhibiting improved thermal stability are constantly being sought in addition to formulations for condensation curable silicone composition convertible to a solvent resistant elastomer exhibiting improved thermal stability based on the use of a conventional fluorosilicone fluid as the base polymer.

### BRIEF SUMMARY OF THE INVENTION

The present invention provides a method for making a neutral, condensation curable, fluorosilicone sealant composition comprising uniformly blending together:
(a) a silanol terminated fluorosilicone fluid,
(b) a crosslinker, of the formula (2) below,
(c) an effective amount of a condensation catalyst, and
(d) filler.

A further embodiment of the present invention provides a neutral, condensation curable, fluorosilicone sealant composition which comprises
(a) a silanol terminated fluorosilicone fluid,
(b) a crosslinker, of the formula (2) below,
(c) an effective amount of a condensation catalyst, and
(d) filler.

### BRIEF DESCRIPTION OF THE DRAWING

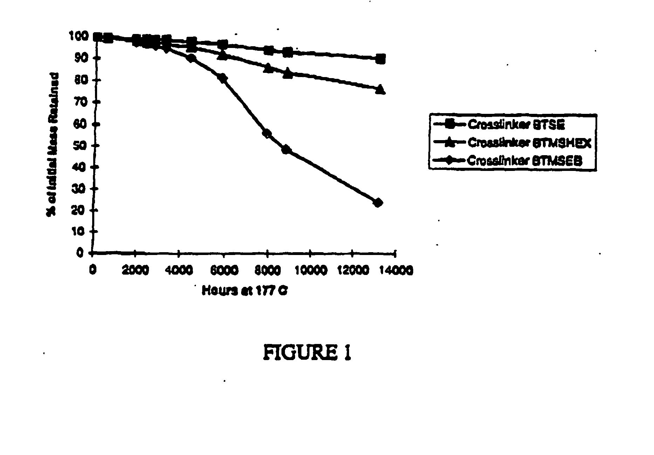

Figure 1 is a graphical representation of the percent of the initial mass of the sealant retained, measured gravimetrically with various crosslinkers for a period greater than about 13,000 hours.

### DETAILED DESCRIPTION OF THE INVENTION

The present invention is based on the discovery that a condensation curable fluorosilicone sealant composition having improved weight loss stability under isothermal conditions after greater than about 2000 hours of exposure in air at elevated temperatures can be made by employing a fluorosilicone rubber fabrication procedure resulting in the reaction between a silanol terminated polydiorganosiloxane comprising organofluorosiloxy units formula (1),

R(R¹)SiO-, (1)

where R is a C₍₁₋₁₂₎ organic radical, and R¹ is a C ₍₃₋₈₎ polyfluoroalkyl radical and a (polyalkoxysilyl)alkylene crosslinker of the formula,

Y -Si-R² -Si-Y, (2)

in the presence of an effective amount of a condensation catalyst, where R² is a C₍₂₋₆₎ alkylene radical, Y is a polyalkoxy group having the formula,

(R³O)₂(X)-,

R³ is a C₍₁₋₁₂₎ alkyl radical, and X is a member selected from R³ and R³O. It has been found that condensation curable fluorosilicone sealant compositions having an effective amount of a bis(polyalkoxy)silylalkylene crosslinker exhibit a substantially lower level of weight loss greater than about 2000 hours of exposure at 177°C in air as compared to an analogous condensation curable fluorosilicone sealant composition having an effective amount of a bis(polyalkoxysilylalkyl)arylene crosslinker, such as 1,4-bis[trimethoxysilyl(ethyl)]benzene as seen in Figure 1. The crosslinker is typically present in a range between about 1 part and about 20 parts by weight per 100 parts by weight of the silanol terminated fluoroalkyl substituted polydiorganosiloxane. In addition, the condensation curable fluorosilicone sealant composition can employ a silanol terminated polydiorganosiloxane base polymer comprising chemically combined organofluorosiloxy units of formula (1), without resorting to the insertion of silylarylene groups in the polymer back-bone, or modification of the base polymer in the terminal position.

In the practice of the method of the invention, the neutral, room temperature condensation curable, solvent resistant sealant composition is preferably prepared by initially forming a "paste" in the form of a substantially uniform blend of filler, and silanol terminated fluorosilicone fluid. "Neutral" as used herein refers to a sealant composition which is substantially acid-free and substantially base-free. Additional components, such as a heat stabilizer, also can be added. Any number of methods for blending said components known in the art may be utilized, such as batchwise shearing in a double planetary, change-can type mixer. Preferably, the paste is prepared in a continuous fashion on a devolatilizing, counter-rotating, non-intermeshing twin screw extruder, as taught in U.S. Patent No. 4,528,324, U.S. Patent No. 5,354,833, and U.S. Patent No. 5,514,749. Blending of the ingredients typically is carried out using external heating at temperatures in a range between about 50°C and about 200°C, preferably in range between about 100°C and about 150°C. A vacuum also can be used on the paste to degas, deaerate, or combination thereof to achieve a substantially uniform paste.

The (polyalkoxysilyl)alkylene crosslinker of formula (2) is then blended with the above-described substantially uniform paste. An effective amount of a condensation curing catalyst is incorporated into the resulting blend as a separate component at the time of use to afford a room temperature vulcanizing rubber. Alternatively, both the crosslinker and condensation curing catalyst may be kept separate from the polydiorganosiloxane-filler paste until curing of the composition is desired, at which time these components, either separately or together are mixed with the paste to afford a room temperature vulcanizing rubber.

Commercially available silanol terminated fluorosilicone fluids having a viscosity at about 25°C in a range between about 6x10⁴ mPa.s (centipoise) and about 1.6x 10⁵ mPa.s (centipoise) can be used as the base polymer in the practice of the method of the invention to prepare the neutral, room temperature condensation curable, solvent resistant sealant compositions exhibiting improved isothermal heat loss stability at temperatures at about 177°C in air for periods greater than about 2000 hours. The silanol terminated fluorosilicone fluid is present at about 100 parts by weight of the sealant composition.

While the silanol terminated polyfluoroalkyl silicone fluids preferably include chemically combined methyl(trifluoropropyl)siloxy units, other organo(polyfluoroalkyl)siloxy units also can be present, such as siloxy units substituted with different C(₁₋₁₂) organo radicals, in addition to methyl, for example, C₍₂₋₁₂₎ alkyl radicals, such as ethyl, propyl, and butyl and aryl radicals, for example, phenyl; the siloxy units also can be substituted with other C₍₃₋₈₎ polyfluoroalkyl units, for example, tridecafluoro-1,1,2,2-tetrahydrooctyl units, nonafluoro-1,1,2,2-tetrahydrohexyl units, and pentafluoro-1,1,2,2-tetrahydrobutyl units.

Among the condensation curing catalysts which can be used in the neutral condensation curable room temperature fluorosilicone sealant compositions of the present invention are organometallic compounds which include, for example, dibutyltin diacetate, dimethyltin neodecanoate, dibutyltin dilaurate, stannous octoate, dimethyltin hydroxyoleate, or combinations thereof. - An effective amount of the condensation catalyst is in a range between about 0.1 parts and about 5.0 parts by weight per 100 parts by weight of sealant composition. Preferably, the condensation catalyst is present in a range between about 0.1 parts and about 1.0 parts by weight per 100 parts by weight of sealant composition.

While fumed silica is preferably used in the sealant composition as a reinforcing filler, extending fillers, such as diatomaceous earth, precipitated silica, ground quartz, and calcium carbonate, also can be employed in particular instances. It is preferred to use fumed silica which has been pretreated with an effective amount of a cyclic siloxane, such as octamethylcyclotetrasiloxane, or a mixture thereof with an organosilazane, such as hexamethyldisilazane. There can be used filler in a range between about 0 parts and about 30 parts by weight per 100 parts by weight of the silanol terminated fluorosilicone fluid. Preferably, the filler is present in a range between about 5 parts and about 15 parts by weight per 100 parts by weight of the silanol terminated fluorosilicone fluid. In addition, to reinforcing or extending fillers, there also can be used heat stabilizers, such as iron oxide, ceric oxide, and titanium dioxide in a range between about 0.1 parts and about 10 parts by weight per 100 parts by weight of the silanol terminated fluorosilicone fluid.

The crosslinker in the present invention can be employed in non-corrosive cure systems to fabricate elastomers useful as fuel resistant sealing materials, electronic encapsulation, and in applications requiring chemically resistant materials. Particularly, the crosslinkers can be used for preparation of fuel tank sealants.

In order that those skilled in the art will be better able to practice the invention, the following example is given by way of illustration, and not by way of limitation. All parts are by weight unless otherwise indicated.

### EXAMPLE

A sealant composition was prepared in a SemKit^{®} Mixer of PRC Desoto Inc of Mt. Laurel, NJ. Initially, a paste was prepared in a continuous fashion on a devolatizing, counter-rotating, non-intermeshing twin screw extruder. The paste consisted of a 100 parts of a silanol terminated polyfluoropropyl substituted polydimethylsiloxane having a viscosity of about 100,00 mPa.s (centipoise) at 25°C, a silanol content of about 0.05 weight %, and including chemically combined trifluoropropylmethylsiloxy units, 9.2 parts of octamethylcyclotetrasiloxane treated fumed silica, and 5.7 parts of iron oxide.

The crosslinker, 1,4-bis[trimethoxysilyl(ethyl)]benzene (4.16 parts) which hereinafter will be referred to as BTMSEB, and 0.50 part of dibutyltin diacetate was subsequently added to 100 parts of paste. The resulting mixture was dispensed from a Semco^{®} tube of PRC Desoto into an open mold and allowed to cure as thin sheets at room temperature at 50% relative humidity (RH) for one week. Tensile bar specimens were cut and weighed. A similar procedure was used to prepare additional tensile bar specimens to provide a series of test samples using the BTMSEB crosslinker and having respectively 8.69% and 11. 11% by weight fumed silica filler, based on weight of silanol terminated polyfluoropropyl substituted polydimethylsiloxane.

Following the same procedure, pastes were prepared to make tensile bar specimens, except that the BTMSEB crosslinker was substituted with additional crosslinkers within the scope of formula (2), for example, 1,2-bis(triethoxysilyl)ethane, or BTSE, and 1,6-bis(trimethoxysilyl)hexane, or BTMSHEX.

The respective tensile bar specimens were placed in glass trays in a laboratory oven and subjected to isothermal heating at 177°C in air. Periodically, the samples were removed for re-weighing to determine weight loss over a period greater than 13,000 hours. The results are shown in Figure 1, showing a dramatic weight-loss for sealants employing crosslinkers falling outside the scope of formula (2).

While typical embodiments have been set forth for the purpose of illustration, the foregoing description should not be deemed to be a limitation on the scope of the invention. Accordingly, various modifications, adaptations, and alternatives may occur to one skilled in the art without departing from the spirit and scope of the present invention.

## Claims

1. A method for making a neutral, condensation curable, fluorosilicone sealant composition comprising uniformly blending together:
(a) a silanol terminated fluorosilicone fluid,
(b) a crosslinker, having the formula,
Y -Si-R² -Si-Y,
where R² is a C₍₂₋₆₎ alkylene radical, Y is a polyalkoxy group having the formula,
(R³O)₂(X)-,
R³ is a C₍₁₋₆₎ alkyl radical, and X is R³ or R³O,
(c) an effective amount of a condensation catalyst, and
(d) a filler.

2. The method in accordance with claim 1, wherein the silanol terminated fluorosilicone fluid comprises chemically combined units of the formula,
R(R¹)SiO-,
wherein R is a C₍₁₋₁₂₎ organic radical, and R¹ is a C ₍₃₋₈₎ polyfluoroalkyl radical.

3. A method for making a neutral, condensation curable, fluorosilicone sealant composition comprising the following 2 steps wherein step (1) comprises uniformly blending together component ingredients, where said ingredients comprise:
(a) about 100 parts by weight of a silanol terminated fluorosilicone fluid having a viscosity of about 100,000 mPa.s (centipoise) at 25°C, which comprises chemically combined trifluoropropylmethylsiloxy units,
(b) a (polyalkoxysilyl)alkylene crosslinker in a range between about 1 part and about 20 parts by weight per 100 parts of the silanol terminated fluorosilicone fluid,
(c) silica filler in a range between about 5 parts and about 15 parts by weight per 100 parts by weight of the silanol terminated fluorosilicone fluid, and
(d) iron oxide in a range between about 0.1 parts and about 10 parts by weight per 100 parts by weight of the silanol terminated fluorosilicone fluid,
wherein blending occurs at a temperature in a range between about 100°C and about 150°C to provide a paste from said ingredients and
wherein step (2) comprises blending to the paste:
(e) dibutyltin diacetate in a range between about 0.1 parts and about 1.0 parts by weight per 100 parts by weight of the sealant composition.

4. A neutral, condensation curable, fluorosilicone sealant composition which comprises
(a) a silanol terminated fluorosilicone fluid,
(b) a crosslinker, having the formula,
Y -Si-R² -Si-Y,
where R² is a C₍₂₋₆₎ alkylene radical, Y is a polyalkoxy group having the formula,
(R³O)₂(X)-,
R³ is a C₍₁₋₆₎ alkyl radical, and X is R³ or R³O.
(c) an effective amount of a condensation catalyst, and
(d) a filler.

5. The composition in accordance with claim 4, where the silanol terminated fluorosilicone fluid comprises chemically combined units of the formula,
R(R¹)SiO-,
wherein R is a C₍₁₋₁₂₎ organic radical, and R¹ is a C₍₃₋₈₎ polyfluoroalkyl radical.

6. The composition in accordance with claim 4, where the organometallic compound comprises dibutyltin diacetate, dimethyltin neodecanoate, dibutyltin dilaurate, stannous octoate, dimethyltin hydroxyoleate, or combinations thereof.

7. The composition in accordance with claim 4, where the filler comprises fumed silica.

8. The composition in accordance with claim 4, where the sealant composition comprises a heat stabilizer.

9. A neutral, condensation curable, fluorosilicone sealant composition which comprises:
(a) 100 parts by weight of a silanol terminated fluorosilicone fluid having a viscosity of about 100,000 mPa.s (centipoise) at 25°C, which comprises chemically combined trifluoropropylmethylsiloxy units,
(b) a (polyalkoxysilyl)alkylene crosslinker in a range between about 1 part and about 20 parts by weight per 100 parts of the silanol terminated fluorosilicone fluid,
(c) dibutyltin diacetate in a range between about 0.1 parts and about 1.0 parts by weight per 100 parts by weight of the sealant composition,
(d) fumed silica filler in a range between about 5 parts and about 15 parts by weight per 100 parts by weight of the silanol terminated fluorosilicone fluid, and
(e) iron oxide in a range between about 0.1 parts and about 10 parts by weight per 100 parts by weight of the silanol terminated fluorosilicone fluid.

10. The composition in accordance with claim 9, where the (polyalkoxysilyl)alkylene crosslinker comprises 1,2-bis(triethoxysilyl)ethane, 1,6-bis(trimethoxysilyl)hexane, or combinations thereof.

## Patentansprüche

1. Verfahren zum Herstellen einer neutralen, durch Kondensation aushärtbaren Fluorsilikon-Dichtungsmassenzusammensetzung, umfassend das gleichmäßige Zusammenmischen folgender Stoffe:
(a) eines Fluorsilikonöls mit Silanol-Endgruppen
(b) eines Vernetzungsmittels mit der Formel
Y -Si-R² -Si-Y,
wobei R² ein C₍₂₋₆₎-Alkenradikal, Y eine Polyalkoxygruppe mit der Formel
(R³O)₂(X)-
und R³ ein C₍₁₋₆₎-Alkylradikal und X gleich R³ oder R³O ist,
(c) einer wirksamen Menge eines Kondensationskatalysators und
(d) eines Füllstoffs.

2. Verfahren nach Anspruch 1, wobei das Fluorsilikonöl mit Silanol-Endgruppen chemisch verbundene Einheiten mit der Formel
R(R¹)SiO-
umfasst,
wobei R ein organisches C₍₁₋₁₂₎-Radikal und R¹ ein C₍₃₋₈₎Polyfluoralkylradikal ist.

3. Verfahren zum Herstellen einer neutralen, durch Kondensation aushärtbaren Fluorsilikon-Dichtungsmassenzusammensetzung, umfassend die folgenden 2 Schritte, wobei Schritt (1) das gleichmäßige Zusammenmischen von Teilbestandteilen umfasst, wobei die Bestandteile Folgendes umfassen:
(a) etwa 100 Gewichtsanteile eines Fluorsilikonöls mit Silanol-Endgruppen mit einer Viskosität von etwa 100.000 mPa s (Centipoise) bei 25 °C, das chemisch verbundene Trifluorpropylmethylsiloxyeinheiten umfasst,
(b) ein Vernetzungsmittel aus (Polyalkoxysilyl)-Alken in einem Bereich zwischen etwa 1 Gewichtsanteil und etwa 20 Gewichtsanteilen pro 100 Gewichtsanteilen des Fluorsilikonöls mit Silanol-Endgruppen,
(c) Füllstoff Kieselsäure in einem Bereich zwischen etwa 5 Gewichtsanteilen und etwa 15 Gewichtsanteilen pro 100 Gewichtsanteilen des Fluorsilikonöls mit Silanol-Endgruppen, und
(d) Eisenoxid in einem Bereich zwischen etwa 0,1 Gewichtsanteilen und etwa 10 Gewichtsanteilen pro 100 Gewichtsanteilen des Fluorsilikonöls mit Silanol-Endgruppen,
wobei das Mischen bei einer Temperatur in einem Bereich zwischen etwa 100 °C und etwa 150 °C erfolgt, um eine Paste aus den Bestandteilen bereitzustellen, und
wobei Schritt (2) das Zumischen des folgenden Stoffs zur Paste umfasst:
(e) Dibutylzinndiacetat in einem Bereich zwischen etwa 0,1 Gewichtsanteilen und etwa 1,0 Gewichtsanteilen pro 100 Gewichtsanteilen der Dichtungsmassenzusammensetzung.

4. Neutrale, durch Kondensation aushärtbare Fluorsilikon-Dichtmassenzusammensetzung, die Folgendes umfasst:
(a) ein Fluorsilikonöl mit Silanol-Endgruppen,
(b) ein Vernetzungsmittel mit der Formel
Y -Si-R² -Si-Y,
wobei R² ein C₍₂₋₆₎-Alkenradikal, Y eine Polyalkoxygruppe mit der Formel
(R³O)₂(X)-
und R³ ein C(₁₋₆)-Alkylradikal und X gleich R³ oder R³O ist,
(c) eine wirksame Menge eines Kondensationskatalysators und
(d) einen Füllstoff.

5. Zusammensetzung nach Anspruch 4, wobei das Fluorsilikonöl mit Silanol-Endgruppen chemisch verbundene Einheiten mit der Formel
R(R¹)SiO-
umfasst,
wobei R ein organisches C₍₁₋₁₂₎-Radikal und R¹ ein C₍₃₋₈₎-Polyfluoralkylradikal ist.

6. Zusammensetzung nach Anspruch 4, wobei die organometallische Verbindung Dibutylzinndiacetat, Dimethylzinn-Neodecanoat, Dibutylzinndilaurat, Zinn(II)octoat, Dimethylzinn-Hydroxyoleat oder Kombinationen davon umfasst.

7. Zusammensetzung nach Anspruch 4, wobei der Füllstoff pyrogene Kieselsäure umfasst.

8. Zusammensetzung nach Anspruch 4, wobei die Dichtungsmassenzusammensetzung einen Wärmestabilisator umfasst.

9. Neutrale, durch Kondensation aushärtbare Fluorsilikon-Dichtungsmassenzusammensetzung, die Folgendes umfasst:
(a) etwa 100 Gewichtsanteile eines Fluorsilikonöls mit Silanol-Endgruppen mit einer Viskosität von etwa 100.000 mPa s (Centipoise) bei 25 °C, das chemisch verbundene Trifluorpropylmethylsiloxyeinheiten umfasst,
(b) ein Vernetzungsmittel aus (Polyalkoxysilyl)-Alken in einem Bereich zwischen etwa 1 Gewichtsanteil und etwa 20 Gewichtsanteilen pro 100 Gewichtsanteilen des Fluorsilikonöls mit Silanol-Endgruppen,
(c) Dibutylzinndiacetat in einem Bereich zwischen etwa 0,1 Gewichtsanteilen und etwa 1,0 Gewichtsanteilen pro 100 Gewichtsanteilen der Dichtungsmassenzusammensetzung,
(d) Füllstoff pyrogene Kieselsäure in einem Bereich zwischen etwa 5 Gewichtsanteilen und etwa 15 Gewichtsanteilen pro 100 Gewichtsanteilen des Fluorsilikonöls mit Silanol-Endgruppen und
(e) Eisenoxid in einem Bereich zwischen etwa 0,1 Gewichtsanteilen und etwa 10 Gewichtsanteilen pro 100 Gewichtsanteilen des Fluorsilikonöls mit Silanol-Endgruppen.

10. Zusammensetzung gemäß Anspruch 9, wobei das Vernetzungsmittel aus (Polyalkoxysilyl)-Alken 1,2-bis(triethoxysilyl)ethan, 1,6-bis(trimethoxysilyl)hexan oder Kombinationen davon umfasst.

## Revendications

1. Procédé pour faire une composition de matériau d'étanchéité à base de fluorosilicone, durcissable par condensation, neutre comprenant de mélanger ensemble de façon homogène:
(a) un fluide de fluorosilicone à terminaison silanol,
(b) un agent de réticulation, ayant pour formule,
Y-Si-R²-Si-Y,
où R² est un radical alkylène en C₍₂₋₆₎, Y est un groupe polyalcoxy ayant pour formule,
(R³O)₂(X)-,
R³ est un radical alkyle en C(₁₋₆), et X est R³ ou R³O,
(c) une quantité efficace d'un catalyseur de condensation, et
(d) une matière de charge.

2. Procédé selon la revendication 1, dans lequel le fluide de fluorosilicone à terminaison silanol comprend des motifs chimiquement combinés de formule,
R(R¹)SiO-,
dans laquelle R est un radical organique en C₍₁₋₁₂₎, et R¹ est un radical polyfluoroalkyle en C₍₃₋₈₎.

3. Procédé pour faire une composition de matériau d'étanchéité à base de fluorosilicone, durcissable par condensation, neutre comprenant les 2 étapes suivantes, dans lequel l'étape (1) comprend de mélanger ensemble de façon homogène les ingrédients composants, où lesdits ingrédients comprennent:
(a) environ 100 parties en poids d'un fluide de fluorosilicone à terminaison silanol ayant une viscosité d'environ 100.000 mPa.s (centipoise) à 25°C, qui comprend des motifs trifluoropropylméthylsiloxy chimiquement combinés,
(b) un agent de réticulation (polyalcoxysilyl)alkylène en un intervalle entre environ 1 partie et environ 20 parties en poids pour 100 parties du fluide de fluorosilicone à terminaison silanol,
(c) de la matière de charge silice en un intervalle entre environ 5 parties et environ 15 parties en poids pour 100 parties en poids du fluide de fluorosilicone à terminaison silanol, et
(d) de l'oxyde de fer en un intervalle entre environ 0,1 partie et environ 10 parties en poids pour 100 parties en poids du fluide de fluorosilicone à terminaison silanol,
dans lequel le mélange a lieu à une température dans un intervalle entre environ 100°C et environ 150°C pour fournir une pâte à partir desdits ingrédients et
dans lequel l'étape (2) comprend de mélanger à la pâte:
(e) du diacétate de dibutylétain en un intervalle entre environ 0,1 partie et environ 1,0 partie en poids pour 100 parties en poids de la composition de matériau d'étanchéité.

4. Composition de matériau d'étanchéité à base de fluorosilicone, durcissable par condensation, neutre, qui comprend:
(a) un fluide de fluorosilicone à terminaison silanol,
(b) un agent de réticulation, ayant pour formule,
Y-SI-R²-Si-Y,
où R² est un radical alkylène en C₍₂₋₆₎, Y est un groupe polyalcoxy ayant pour formule,
(R³O)₂(X)-,
R³ est un radical alkyle en C(₁₋₆), et X est R³ ou R³O.
(c) une quantité efficace d'un catalyseur de condensation, et
(d) une matière de charge.

5. Composition selon la revendication 4, où le fluide de fluorosilicone à terminaison silanol comprend des motifs chimiquement combinés de formule,
R(R¹)SiO-,
dans laquelle R est un radical organique en C₍₁₋₁₂₎, et R¹ est un radical polyfluoroalkyle en C₍₃₋₈₎.

6. Composition selon la revendication 4, où le composé organométallique comprend le diacétate de dibutylétain, le néodécanoate de diméthylétain, le dilaurate de dibutylétain, l'octoate stanneux, l'hydroxyoléate de diméthylétain ou les combinaisons de ceux-ci.

7. Composition selon la revendication 4, où la matière de charge comprend la fumée de silice.

8. Composition selon la revendication 4, où la composition de matériau d'étanchéité comprend un stabilisant thermique.

9. Composition de matériau d'étanchéité à base de fluorosilicone, durcissable par condensation, neutre, qui comprend:
(a) 100 parties en poids d'un fluide de fluorosilicone à terminaison silanol ayant une viscosité d'environ 100.000 mPa.s (centipoise) à 25°C, qui comprend des motifs trifluoropropylméthylsiloxy chimiquement combinés,
(b) un agent de réticulation (polyalcoxysilyl)alkylène en un intervalle entre environ 1 partie et environ 20 parties en poids pour 100 parties du fluide de fluorosilicone à terminaison silanol,
(c) du diacétate de dibutylétain en un intervalle entre environ 0,1 partie et environ 1,0 partie en poids pour 100 parties en poids de la composition de matériau d'étanchéité,
(d) de la matière de charge fumée de silice en un intervalle entre environ 5 parties et environ 15 parties en poids pour 100 parties en poids du fluide de fluorosilicone à terminaison silanol, et
(e) de l'oxyde de fer en un intervalle entre environ 0,1 partie et environ 10 parties en poids pour 100 parties en poids du fluide de fluorosilicone à terminaison silanol.

10. Composition selon la revendication 9, où l'agent de réticulation (polyalcoxysilyl)alkylène comprend le 1,2-bis(triéthoxysilyl)éthane, le 1,6-bis(triméthoxysilyl)hexane ou les combinaisons de ceux-ci.
